# FASCICULE DE BREVET EUROPEEN

(11) **EP 3 445 529 B1**
(45) Date de publication et mention de la délivrance du brevet: **20.11.2019**
(21) Numéro de dépôt: 16719335.8
(22) Date de dépôt: 18.04.2016
(51) Int. Cl.: B23Q 17/22, B23B 25/06

(54) **ACCESSOIRE DE CENTRAGE D'OUTILS SUR UNE MACHINE D'USINAGE, PROCEDE DE CENTRAGE ET DISPOSITIF D'AIDE AU CENTRAGE COMPRENANT UN TEL ACCESSOIRE**
ZUBEHÖR ZUM ZENTRIEREN VON WERKZEUGEN AUF EINEM BEARBEITUNGSGERÄT, ZENTRIERVERFAHREN UND ZENTRIERHILFSVORRICHTUNG MIT SOLCH EINEM ZUBEHÖR
ACCESSORY FOR CENTRING TOOLS ON A MACHINING APPLIANCE, CENTRING METHOD AND CENTRING ASSISTANCE DEVICE COMPRISING SUCH AN ACCESSORY

(43) Date de publication de la demande: 27.02.2019
(73) Titulaire: Wibemo S.A., 2832 Rebeuvelier (CH)
(72) Inventeur: CHETELAT, Clovis, 2824 Vicques (CH); BOILLAT, André, 2740 Moutier (CH)
(74) Mandataire: Bovard SA Neuchâtel
(86) Numéro de dépôt international: PCT/EP2016/058537
(87) Numéro de publication internationale: WO 2017/182049

(56) Documents cités:
- EP-A1- 2 390 622
- EP-A1- 2 546 025
- EP-A1- 2 835 702

## Description

### Domaine technique

La présente invention se rapporte au domaine technique de l'usinage de pièces métalliques et ou de matières synthétiques. Elle concerne plus particulièrement un accessoire de centrage d'outils sur des machines d'usinage à canon tournant de type tours à commande numérique, un dispositif de centrage d'outil doté d'un tel accessoire et un procédé de centrage associé.

### Etat de la technique

Dans le domaine de l'usinage de pièces pour des industries de grande précision comme l'horlogerie, l'électronique ou encore le médical, on cherche à usiner des pièces de très faibles dimensions dont la fonctionnalité est intimement liée à la précision dimensionnelle et donc à la précision d'usinage. Cette précision d'usinage dépend notamment, voire essentiellement, du positionnement des outils d'usinage et notamment leur centrage par rapport à l'axe de rotation du canon tournant des machines-outils utilisées pour les opérations d'usinage

Le centrage des outils d'usinage sur l'axe du canon tournant permet de définir une position de référence la plus précise possible, à partir de laquelle sont calculés des déplacements des outils lors d'opérations d'usinage vis-à-vis des pièces à usiner. Tout décalage des outils d'usinage par rapport à l'axe de rotation du canon tournant qui les porte est susceptible d'engendrer des défauts sur les pièces usinées, même de l'ordre du centième de millimètre seulement, mais incompatibles avec la qualité et précision requise pour ces pièces, cause de rébus et de pertes financières pour l'usineur.

En outre, le décentrage des outils, notamment de types mèches, engendre d'importantes contraintes mécaniques au sein desdits outils qui conduisent souvent à une rupture prématurée, avec les coûts et désagrément correspondants de remplacement desdits outils et de planification de production pour l'usineur.

Différentes méthodes de centrage et dispositifs associés ont déjà été proposés dans l'état de la technique afin de réduire ou supprimer les défauts de centrage d'outils sur les canons tournants de machines-outils et les conséquences associées tels que précédemment présentés.

La Demanderesse a notamment proposé un procédé de centrage et son dispositif dans la demande WO 2013/007316 A1.

Ce procédé et ce dispositif de centrage sont entièrement satisfaisants pour ce qui est de la précision de centrage des outils sur les machines-outils. Cependant, la mise en œuvre du procédé requiert une certaine expérience et précision manuelle des opérateurs, notamment pour les opérations de positionnement de la sonde de mesure sur le canon-tournant par rapport aux outils à centrer, réservant son emploi à un nombre limité d'utilisateurs préalablement formés à l'utilisation du dispositif et sa mise en œuvre.

### Divulgation de l'invention

La présente invention vise à procurer une solution simplifiée de mise en œuvre du procédé de centrage connu de l'art antérieur.

A cet effet, l'invention concerne dans un premier objet un accessoire de centrage d'un outil ou d'une broche porte-outil dans un canon tournant autour d'un axe fixe X-X' d'une machine d'usinage, caractérisé en ce qu'il comporte un corps rectiligne d'axe longitudinal F-F' comportant à une première extrémité un organe d'alignement dudit axe F-F' sur l'axe X-X' du canon tournant et à une seconde extrémité une tête montée mobile en rotation autour de l'axe F-F' et comportant un organe de positionnement apte à recevoir un outil de positionnement, notamment une sonde de mesure.

Cet accessoire de centrage présent l'avantage de faciliter énormément le position de l'outil de positionnement tel qu'une sonde de mesure su la machine-outil en référence à l'axe de rotation X-X' de son canon tournant sur lequel un outil d'usinage doit être centré, puis de positionner la sonde de manière très précise, sans décalage par rapport audit axe, en différentes positions de mesure et/ou réglage par rapport à l'outil d'usinage.

Dans un mode de réalisation, la tête comporte un arbre d'alignement sur l'axe F-F' du corps, ledit arbre étant solidaire de l'organe de positionnement et apte à être inséré dans un alésage borgne de dimensions complémentaire formé suivant l'axe F-F' à la seconde extrémité du corps.

Dans un mode de réalisation, la tête et la seconde extrémité du corps comportent des moyens de liaison réversible tels que la tête est amovible de ladite seconde extrémité du corps.

Dans un mode de réalisation, les moyens de liaison réversible comportent au moins une clavette déformable et au moins une réservation d'insertion de ladite clavette, ladite clavette déformable et la dite réservation étant arrangées respectivement sur la tête et la seconde extrémité du corps ou inversement.

Dans un mode de réalisation, la tête comporte un épaulement cylindrique intermédiaire entre l'arbre d'alignement et l'organe de support, ledit épaulement présentant un diamètre externe supérieur au diamètre externe de l'arbre, et en ce que le corps comporte un lamage intermédiaire entre une extrémité ouverte de l'alésage et la seconde extrémité du corps, le dit lamage étant tel que ledit épaulement pénètre au moins partiellement dans ledit lamage lorsque la tête est montée à la seconde extrémité du corps.

Dans un mode de réalisation, les moyens de liaison réversible sont arrangés dans une surface cylindrique externe de l'épaulement et une surface cylindrique interne du lamage.

Dans un mode de réalisation, les moyens de liaison réversible comportent au moins une clavette à bille déformable perpendiculairement à un axe commun de révolution de l'arbre et de l'épaulement de la tête et au moins un évidement d'insertion de ladite clavette formée dans une surface cylindrique interne du lamage, ou inversement.

Dans un mode de réalisation, la clavette à bille comporte une bille montée en suspension sur un ressort dans un perçage perpendiculaire à l'axe commun de l'arbre et de l'épaulement de la tête, le diamètre externe de l'extrémité débouchante dudit perçage au niveau de la surface cylindrique externe de l'épaulement étant réduite de manière à permettre une saillie partielle de la bille à la surface dudit épaulement.

Dans un mode de réalisation, l'accessoire de l'invention comporte une pluralité de clavettes déformables réparties suivant une disposition angulaire régulière à la surface de l'épaulement et une pluralité d'évidements correspondant pour chacune des clavettes formés dans la surface cylindrique interne du lamage du corps.

Dans un mode de réalisation, le au moins un évidement est formé par une gorge annulaire d'axe F-F' dans la surface cylindrique interne du lamage du corps.

Dans un mode de réalisation, l'organe de positionnement comporte un plateau de butée contre la seconde extrémité du corps et un logement de calage d'un dit outil de positionnement.

Dans un mode de réalisation, le logement de calage est formé dans un doigt solidaire du plateau de butée et s'étendant perpendiculairement à celui-ci.

Dans un mode de réalisation, l'accessoire de centrage de l'invention comporte en outre des moyens de réglage de la position angulaire de la tête sur le corps autour de l'axe F-F', en particulier au moins une échelle graduée et un curseur formés en regard l'un de l'autre respectivement sur le corps et la tête, ou inversement.

Un second objet de l'invention concerne également un procédé de centrage d'un outil ou d'une broche porte-outil sur l'axe de rotation X-X' d'un canon tournant d'une machine d'usinage à l'aide d'un accessoire de centrage tel que précédemment défini. Ce procédé consiste à :
- a) fixer une sonde de mesure, en particulier de distances, dans l'organe de positionnement de la tête de l'accessoire de centrage,
- b) insérer le corps de l'accessoire dans la broche porte-outil,
- c) déplacer la broche porte-outil pour amener la sonde de mesure en regard d'un étalon porté sur le canon tournant,
- d) déplacer la tête de l'accessoire pour placer la sonde de mesure dans une n positions de mesure successives équidistantes les unes des autres, n étant un nombre entier supérieur à 1 et effectuer une mesure de distance entre la sonde et l'étalon en chaque position,
- e) déterminer les déplacements nécessaires par rapport à l'axe X-X' suivant 3 axes orthogonaux en fonction des valeurs acquises lors des n mesures tel que l'axe F-F' du corps de l'accessoire soit aligné à l'axe X-X',
- f) ajuster la position du porte-outil par rapport à l'axe X-X' en fonction des déplacements déterminés à l'étape e).

Avantageusement lors de la mise en œuvre du procédé de l'invention la sonde est reliée à un dispositif électronique de mesure et de commande, le cas échéant apte à être connecté au système de commande électronique de la machine d'usinage pour piloter automatiquement le réglage de positionnement de l'outil après chaque mesure.

L'invention concerne également dans un troisième objet un dispositif d'aide au centrage d'un outil sur un canon tournant une machine d'usinage comprenant un accessoire de centrage conforme à l'invention tel que précédemment défini, une sonde de mesure apte à être positionnée sur l'organe de positionnement de la tête de l'outil, et un dispositif électronique de mesure coopérant avec la sonde de mesure pour traiter les valeurs mesurées par ladite sonde de mesure.

### Brève description des dessins

D'autres caractéristiques de la présente invention apparaîtront plus clairement à la lecture de la description qui va suivre, faite en référence au dessin annexé, donné à titre d'exemple non limitatif, dans lequel:
- la figure 1 est une illustration schématique d'un exemple de réalisation de l'accessoire de centrage conforme à l'invention vu en perspective,
- les figures 2A et 2B représentent respectivement en vue de dessus et en coupe longitudinale l'accessoire de centrage conforme à l'invention de la figure 1 ;
- la figure 3A représente un agrandissement de la figure 2B au niveau de la liaison entre la tête et le corps de l'accessoire de l'invention et
- la figure 3B représente un agrandissement de la figure 3A montrant en détail le mode de coopération d'une clavette à bille de la tête de l'accessoire de centrage dans une gorge formée dans le corps dudit accessoire pour assurer un accouplement de la tête sur le corps
- la figure 4A est une vue en coupe longitudinale du corps de l'accessoire de centrage selon l'invention et la figure 4B un agrandissement de la figure 4A pris au niveau de l'alésage d'accouplement de la tête sur le corps ;
- la figure 5A est une vue de côté en écorché de la tête de l'accessoire de centrage de l'invention ; la figure 5B une vue en coupe longitudinale dans un plan horizontal médian de cette tête et la figure 5C une coupe transversale suivant un plan vertical perpendiculaire au plan de coupe de la figure 5B prise au niveau d'un épaulement 124 de la tête de l'accessoire de l'invention ;
- La figure 6 représente schématiquement la mise en œuvre de l'accessoire de l'invention suivant le procéder de l'invention.

### Mode(s) de réalisation de l'invention

L'invention va être décrite ci-après en relation plus particulièrement avec le centrage d'outils de perçage, d'outils en bout, de broches de perçage ou de broches de contre-perçage portés sur une broche porte-outil d'une machine d'usinage sur l'axe de rotation d'un canon-tournant de ladite machine-outil tel qu'un tour numérique par exemple. Pour des raisons de simplification de la présentation, il sera fait référence dans la suite de la description, à des outils qu'il conviendra d'entendre au sens large, c'est-à-dire comprenant notamment les exemples précités.

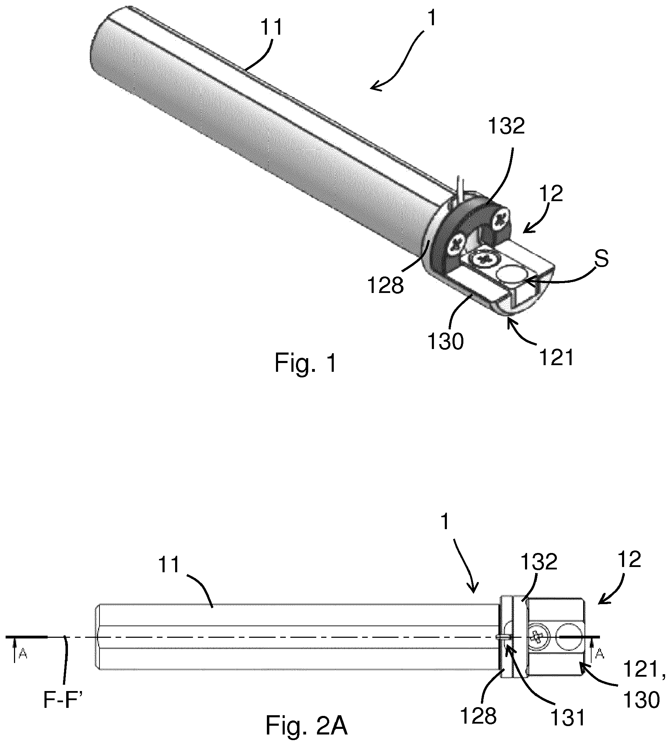

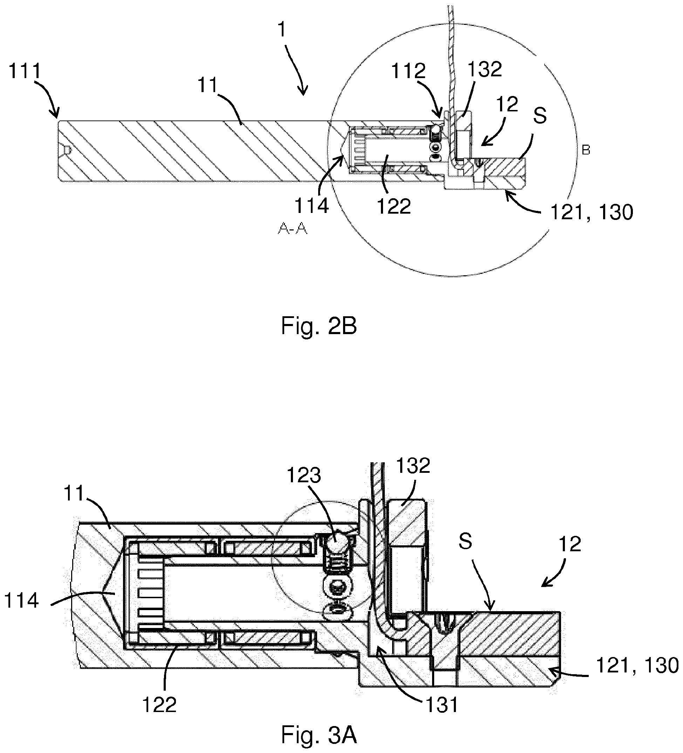

La présente invention propose avantageusement un accessoire de centrage 1 tel que représenté sur les figures 1, 2A et 2B dans un exemple de réalisation préféré.

L'accessoire de centrage 1 comporte un corps 11 de forme allongée suivant un axe longitudinal F-F' destiné à être inséré dans un alésage de porte-outil d'une machine d'usinage en lieu et place d'un outil ou d'une broche porte-outil que l'on souhaite centrer par rapport à l'axe de rotation du canon tournant de la machine d'usinage.

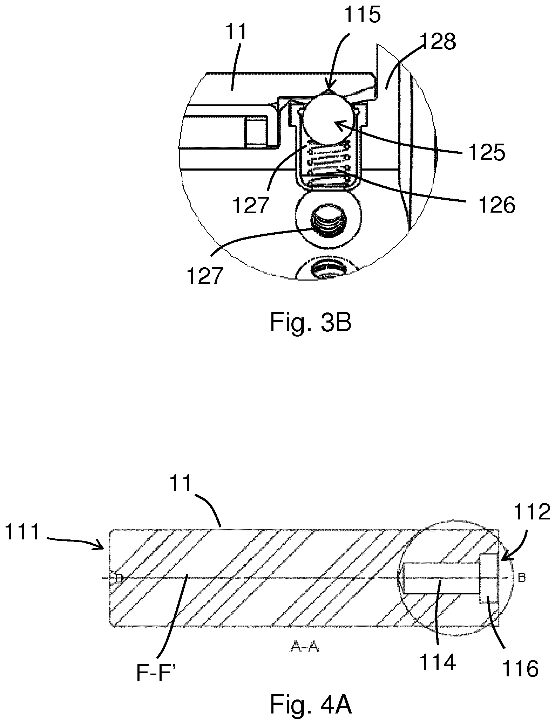

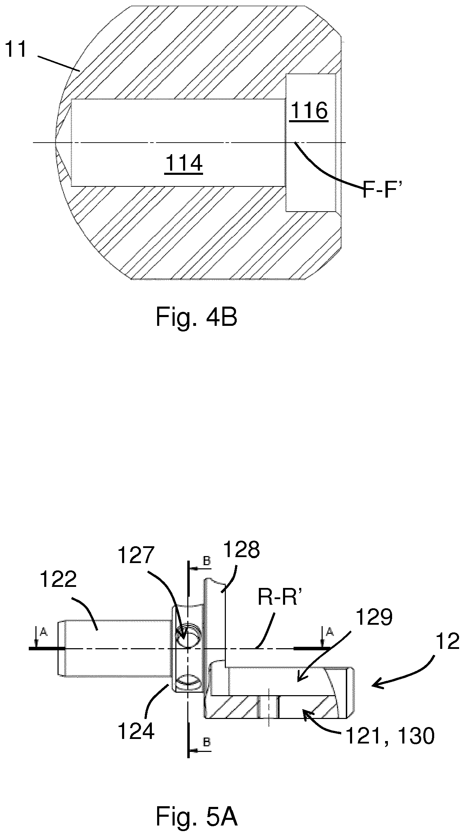

Le corps 11 est constitué d'un cylindre métallique d'axe longitudinal F-F' à la surface duquel est formé un méplat s'étendant sur toute la longueur du cylindre entre une première extrémité 111 et une seconde extrémité 112 du corps 11. Comme représenté aux figures 4a et 4B, un alésage borgne 114 de diamètre dc1 est formé suivant l'axe F-F' du corps 11 à la seconde extrémité 112 de celui-ci, l'orifice débouchant dudit alésage 114 étant formé d'un lamage 116 de diamètre dc2 supérieur à dc1.

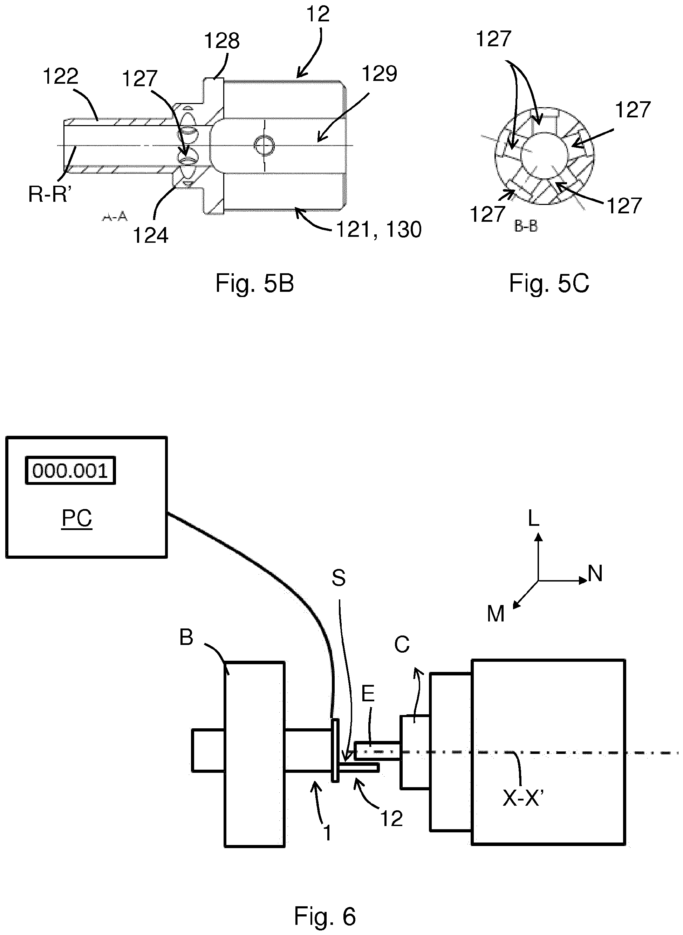

En référence aux figures 1 à 3A une tête 12 est montée de manière rotative à la seconde extrémité 112 du corps 11 de manière à pouvoir pivoter librement autour de l'axe longitudinal F-F' du corps. Comme représenté aux figures 3A, 5A et 5B notamment cette tête 12 comporte un arbre 122 d'alignement et d'insertion dans l'alésage 114 du corps 11 et un organe de positionnement 121 apte à recevoir un outil de positionnement, notamment une sonde de mesure S. Le diamètre externe dt1 de l'arbre 122 est sensiblement égal au diamètre dc1 de l'alésage de sorte qu'il n'existe pas de jeu entre le corps 11 et la tête 12 après insertion de l'arbre 122 dans l'alésage 114. Un épaulement 124 de diamètre externe dt2 sensiblement égal au diamètre dc2 du lamage 116 est formé de matière entre l'organe de positionnement 121 et l'arbre 122 de telle sorte que ledit épaulement 124 pénètre complètement dans le lamage 116 lors de l'insertion de la tête 12 sur le corps 11, ladite tête venant en butée contre l'extrémité 112 du corps 11 sur un plateau 128 de l'organe de positionnement 121 comme représenté en détail à la figure 3A.

L'organe de positionnement 121 prend dans l'exemple représenté sur les figures la forme d'un doigt 130 s'étendant perpendiculairement au plateau 128 de butée de la tête 12. Le doigt 130 comporte avantageusement un creuset ou logement 129 centré sur l'axe longitudinal R-R' de la tête 12. Ce creuset 129 est de forme adaptée de préférence pour y disposer et y caler de manière stable un outil de mesure tel qu'une sonde de mesure S, notamment une sonde S de mesure de distances constituée d'un détecteur inductif. Cette sonde de mesure S est de préférence associée à un dispositif de mesure tel que décrit dans WO 2013/007316 A1 afin de procéder au centrage d'un outil en regard du canon tournant de machine d'usinage comme il sera décrit par la suite.

Dans l'exemple représenté sur les figures la sonde de mesure S adopte une forme générale sensiblement parallélépipédique et le creuset une section rectangulaire correspondante. Toutefois, il est bien entendu que la sonde S comme le creuset 129 peuvent avoir toute autre forme, seule la correspondance ou compatibilité de leur formes mutuelles étant nécessaires pour assurer un maintien stable de la sonde S dans le creuset 129.

Par ailleurs l'organe de positionnement 121 peut également le cas échéant adopter une structure autre qu'un doigt 130 tel que représenté sur les figures, notamment par exemple une structure de mors élastiques entre lesquels la sonde S peut être calée et maintenue.

Par ailleurs, comme visible notamment sur les figures 1 à 3A, une goulotte 131 de passage d'un câble de liaison de la sonde S peut être ménagée dans le plateau 128 afin de ne pas perturber les prises de mesures à l'aide de ladite sonde. Avantageusement, un strap 132 de blocage du câble de sonde dans la goulotte 131 peut être fixé par tout moyen approprié sur le plateau 128.

Conformément à l'invention, la tête 12 et le corps 11 comportent des moyens 115, 123 de liaison réversible tels que la tête 12 est amovible de la seconde extrémité 112 du corps 11. Dans une forme de réalisation préférée représentée sur les figures 2B à 5C ces moyens de liaison réversible comportent au moins une clavette déformable 123 arrangée dans l'épaulement 124 de la tête 12 et au moins une réservation 115 au niveau de la seconde extrémité 112 du corps, en particulier dans la paroi cylindrique interne du lamage 116.

De préférence, la tête 12 comporte une pluralité de clavettes déformables 123 réparties suivant une disposition angulaire régulière (Fig. 5A à 5C) à la surface et dans l'épaulement 124 et une pluralité d'évidements 115 correspondant pour chacune des clavettes formés dans la surface cylindrique interne du lamage du corps.

Pour simplifier la réalisation, une gorge annulaire 115 peut constituer la réservation dans la paroi cylindrique interne du lamage 116 afin de procurer l'accouplement avec les clavettes 123 de la tête est formé par une gorge annulaire d'axe F-F' dans la surface cylindrique interne du lamage 116.

Dans la forme de réalisation préférée représentée sur les figures, notamment sur la figure 3B, chacune des clavettes 123 est constituée d'une clavette à bille 125 montée en suspension sur un ressort 126 dans un perçage 127 perpendiculairement à l'axe commun de révolution R-R' de l'arbre 122 et de l'épaulement 124 de la tête 12. Le diamètre externe de l'extrémité débouchante du perçage 127 au niveau de la surface cylindrique externe de l'épaulement 124 est avantageusement réduite, par exemple par un anneau élastique de type circlip ou plus simplement un bouchon annulaire de manière à permettre une saillie partielle de la bille 125 à la surface dudit épaulement 124.

Enfin, dans une forme avantageuse de réalisation l'accessoire de centrage 1 de l'invention peut comporter des moyens de réglage de la position angulaire de la tête 12 sur le corps 11 autour de l'axe longitudinal F-F' de ce dernier, par exemple constitué d'au moins une échelle graduée et d'un curseur ou une seconde échelle graduée formés en regard l'un de l'autre respectivement sur le corps 11 et la tête 12, ou inversement.

De tels moyens de réglage de la position angulaire peuvent s'avérer particulièrement utiles lors de la mise en œuvre de l'accessoire 1 pour des opérations de centrage d'outils afin de simplifier la prise de positions régulières en rotation de la tête 12 pour réaliser les mesures nécessaires au calcul de centrage selon un procédé analogue à celui décrit dans WO 2013/007316 A1 et décrit ci-après.

L'utilisation de l'accessoire de centrage 1 de l'invention va maintenant être décrite en référence à la figure 6 dans le cadre du centrage d'un outil sur l'axe de rotation X-X' d'un canon tournant de machine d'usinage tel qu'un tour numérique.

L'accessoire de centrage 1 constitue un porte-sonde dont le corps 11 est adapté pour être positionné sur une broche porte-outil B en lieu et place d'un outil d'usinage qu'on veut centrer sur l'axe X-X' du canon tournant C par ajustement vis-à-vis d'une pièce étalon portée sur le canon tournant. La tête 12 de l'accessoire 1 permet de soutenir une sonde S calée sur l'organe de positionnement 121 et connectée à un dispositif électronique de mesure PC pour traiter les valeurs mesurées par ladite sonde de mesure S et déterminer les déplacements à effectuer par la broche porte-outil suivant 3 axes L,M,N perpendiculaires les uns des autres vis-à-vis de l'axe X-X' du canon tournant. Une fois ces déplacements déterminés, les valeurs correspondantes sont entrées dans le système de commande de la machine d'usinage par un opérateur ou directement transférées électroniquement vers celui-ci par les moyens d'acquisition et de calcul le cas échéant. La broche porte-outil est alors déplacée en concordance et il suffit de placer l'outil dans la broche pour ensuite procéder à l'usinage.

En pratique, on fixe dans une première étape a) la sonde de mesure S dans le creuset 129 de l'organe de positionnement 121 de la tête 12 de l'accessoire de centrage 1.

Dans une seconde étape b) on insère le corps 11 de l'accessoire dans la broche porte-outil, puis dans une 3^{ème} étape c) on déplace la broche porte-outil pour amener la sonde de mesure en regard d'un étalon E porté sur le canon tournant C.

Dans une 4^{ème} étape d) on fait tourner ensuite la tête 12 de l'accessoire sur le corps 11 pour placer la sonde de mesure S dans une n positions de mesure successives équidistantes les unes des autres, n étant un nombre entier supérieur à 1 et effectuer une mesure de distance entre la sonde S et l'étalon en chaque position. Ces positions peuvent notamment être facilement identifiées par l'opérateur lorsque la tête 12 et le corps 11 de l'accessoire 1 comportent des moyens d'ajustement de position angulaires tels que précédemment décrits.

Les valeurs mesurées servent ensuite dans une étape e) à déterminer les déplacements nécessaires par rapport à l'axe X-X' suivant 3 axes orthogonaux en fonction des valeurs acquises lors des n mesures tel que l'axe F-F' du corps de l'accessoire soit aligné à l'axe X-X'.

Enfin dans une étape f) on ajuste la position du porte-outil par rapport à l'axe X-X' en fonction des déplacements déterminés à l'étape e)

Les étapes précédentes sont par exemple effectuées manuellement par un opérateur. Ce dernier vérifie également que la sonde de mesure S est disposée à une distance optimale, par exemple inférieure à 1 mm de l'étalon avant d'effectuer des mesures.

A l'issue de ces opérations, l'accessoire 1 et plus particulière l'axe F-F' du corps 11 de celui-ci est donc centré avec une très grande précision sur l'axe X-X'. il suffit alors de retirer l'accessoire de la broche-porte outil et de la remplacer par un outil d'usinage pour pouvoir procéder à l'usinage d'une pièce portée sur le canon tournant en lieu et place de l'étalon avec une excellente précision.

Si nécessaire, il est possible de réitérer les opérations de centrage pour autant d'outils sur autant de broches porte-outil que nécessaires avant d'initier les opérations d'usinage.

Il convient de noter par ailleurs que l'on peut prévoir de façon avantageuse une pluralité de corps 11 de diamètre différents permettant l'emploi de l'accessoire avec tout type de broche porte-outil, la tête 12 de l'accessoire étant elle ajustable indifféremment sur tous ces différents corps de manière à garantir une mise en œuvre identique du procédé de centrage quelle que soit le corps utilisé.

L'accessoire 1 de l'invention peut ainsi être proposé également sous forme de kit de centrage comportant une tête 12 et une pluralité de corps 11 de diamètres différents et/ou encore dans un dispositif d'aide au centrage comportant en outre une sonde S ou un jeu de sondes S et des moyens de traitement apte à coopérer avec la sonde de mesure pour acquérir et traiter les valeurs mesurées par ladite sonde de mesure lors de la mise en œuvre du procédé de centrage de l'invention.

## Revendications

1. Accessoire (1) de centrage d'un outil (O) ou d'une broche porte-outil sur un axe de rotation X-X' d'un canon tournant de machine d'usinage, **caractérisé en ce qu'**il comporte un corps (11) rectiligne d'axe longitudinal F-F' comportant à une première extrémité (111) un organe d'alignement dudit axe F-F' sur l'axe X-X' du canon tournant et à une seconde extrémité (112) une tête (12) montée mobile en rotation autour de l'axe F-F' et comportant un organe de positionnement (121) apte à recevoir un outil de positionnement (S), notamment une sonde de mesure.

2. Accessoire selon la revendication 1, **caractérisé en ce que** la tête (12) comporte un arbre (122) d'alignement sur l'axe F-F' du corps, ledit arbre (122) étant solidaire de l'organe de positionnement (121) et apte à être inséré dans un alésage borgne (114) de dimensions complémentaires formé selon l'axe F-F' à la seconde extrémité (112) du corps.

3. Accessoire selon la revendication 1 ou 2, **caractérisé en ce que** la tête (12) et la seconde extrémité (112) du corps (11) comportent des moyens (115, 123) de liaison réversible tels que la tête est amovible de ladite seconde extrémité du corps.

4. Accessoire selon la revendication 3, **caractérisé en ce que** les moyens de liaison réversible comportent au moins une clavette déformable (123) et au moins une réservation (115) d'insertion de ladite clavette, ladite clavette déformable et la dite réservation étant arrangées respectivement sur la tête (12) et la seconde extrémité (112) du corps ou inversement.

5. Accessoire selon l'une des revendications 3 ou 4, **caractérisé en ce que** la tête (12) comporte un épaulement cylindrique (124) intermédiaire entre l'arbre d'alignement (122) et l'organe de positionnement (121), ledit épaulement présentant un diamètre externe supérieur au diamètre externe de l'arbre, et **en ce que** le corps (11) comporte un lamage (116) intermédiaire entre une extrémité ouverte de l'alésage borgne (114) et la seconde extrémité du corps (112), le dit lamage (116) étant tel que ledit épaulement (124) pénètre au moins partiellement dans ledit lamage lorsque la tête est montée à la seconde extrémité du corps.

6. Accessoire selon la revendication 5, caractérisé les moyens de liaison réversible (115, 123) sont arrangés dans une surface cylindrique externe de l'épaulement (124) et une surface cylindrique interne du lamage (116).

7. Accessoire selon la revendication 6, **caractérisé en ce que** les moyens de liaison réversible comportent au moins une clavette (123) à bille déformable perpendiculairement à un axe commun de révolution R-R' de l'arbre et de l'épaulement de la tête (12) et au moins un évidement d'insertion (115) de ladite clavette formée dans une surface cylindrique interne du lamage, ou inversement.

8. Accessoire selon la revendication 7, **caractérisé en ce que** la clavette (123) à bille comporte une bille (125) montée en suspension sur un ressort (126) dans un perçage (127) perpendiculaire à l'axe commun R-R' de l'arbre et de l'épaulement de la tête, le diamètre externe de l'extrémité débouchante dudit perçage (127) au niveau de la surface cylindrique externe de l'épaulement étant réduite de manière à permettre une saillie partielle de la bille (125) à la surface dudit épaulement.

9. Accessoire selon l'une des revendications 7 ou 8, **caractérisé en ce qu'**il comporte une pluralité de clavettes déformables (123) réparties suivant une disposition angulaire régulière à la surface de l'épaulement et une pluralité d'évidements (115) correspondant pour chacune des clavettes formés dans la surface cylindrique interne du lamage du corps.

10. Accessoire selon l'une des revendications 7 à 9, **caractérisé en ce que** le au moins un évidement (115) est formé par une gorge annulaire d'axe F-F' dans la surface cylindrique interne du lamage du corps.

11. Accessoire selon l'une des revendications 1 à 10, **caractérisé en ce que** l'organe de positionnement comporte un plateau de butée (128) contre la seconde extrémité du corps et un logement (129) de calage d'un dit outil de positionnement.

12. Accessoire selon la revendication 11, **caractérisé en ce que** le logement de calage est formé dans un doigt (130) solidaire du plateau (128) de butée et s'étendant perpendiculairement à celui-ci.

13. Accessoire selon l'une des revendications 1 à 12, **caractérisé en ce qu'**il comporte des moyens de réglage de la position angulaire de la tête sur le corps autour de l'axe F-F'.

14. Accessoire selon la revendication 14, **caractérisé en ce que** les moyens de réglage de la position angulaire de la tête (12) sur le corps (11) comporte au moins une échelle graduée et un curseur formés en regard l'un de l'autre respectivement sur le corps et la tête, ou inversement.

15. Procédé de centrage d'un outil ou d'une broche porte-outil sur l'axe de rotation X-X' d'un canon tournant (C) d'une machine d'usinage à l'aide d'un accessoire (1) selon l'une des revendications 1 à 14, **caractérisé en ce qu'**il consiste à :
- a) fixer une sonde de mesure (S), en particulier de distances, dans l'organe de positionnement (121) de la tête (12) de l'accessoire de centrage,
- b) insérer le corps (11) de l'accessoire dans une broche (B) porte-outil,
- c) déplacer la broche (B) porte-outil pour amener la sonde (S) de mesure en regard d'un étalon (E) porté sur le canon tournant (C),
- d) déplacer la tête (12) de l'accessoire (1) pour placer la sonde de mesure (S) dans n positions de mesure successives équidistantes les unes des autres, n étant un nombre entier supérieur à 1 et effectuer une mesure de distance entre la sonde et l'étalon en chaque position,
- e) déterminer les déplacements nécessaires par rapport à l'axe X-X' suivant 3 axes orthogonaux en fonction des valeurs acquises lors des n mesures tel que l'axe F-F' du corps de l'accessoire soit aligné à l'axe X-X',
- f) ajuster la position de la broche (B) porte-outil par rapport à l'axe X-X' en fonction des déplacements déterminés à l'étape e).

16. Procédé de centrage selon la revendication 15, **caractérisé en ce que** la sonde (S) est reliée à un dispositif électronique de mesure (PC) et de commande apte à être connecté au système de commande électronique de la machine d'usinage pour piloter automatiquement le réglage de positionnement de l'outil après chaque mesure.

17. Dispositif d'aide au centrage d'un outil sur une machine d'usinage comportant un dispositif à canon tournant, **caractérisé en ce qu'**il comprend :
- un accessoire (1) selon l'une des revendications 1 à 14,
- une sonde de mesure (S) apte à être positionnée sur l'organe de positionnement de la tête de l'outil,
- un dispositif électronique de mesure (PC) coopérant avec la sonde de mesure pour traiter les valeurs mesurées par ladite sonde de mesure.

## Patentansprüche

1. Zubehör (1) zum Zentrieren eines Werkzeugs (O) oder einer Werkzeughalterspindel auf einer Drehachse X-X' einer rotierenden Führungsbuchse einer Bearbeitungsmaschine, **dadurch gekennzeichnet, dass** es einen geradlinigen Körper (11) mit einer Längsachse F-F' umfasst, der an einem ersten Ende (111) ein Element zum Ausrichten der Achse F-F' auf die Achse X-X' der rotierenden Führungsbuchse umfasst, und an einem zweiten Ende (112) einen Kopf (12), der um die Achse F-F' drehbar montiert ist und ein Positionierelement (121) umfasst, das zur Aufnahme eines Positionierwerkzeugs (S), insbesondere einer Messsonde, geeignet ist.

2. Zubehör nach Anspruch 1, **dadurch gekennzeichnet, dass** der Kopf (12) auf der F-F' Achse des Körpers eine Ausrichtwelle (122) umfasst, wobei die Welle (122) fest mit dem Positionierelement (121) verbunden ist und in eine entlang der Achse F-F' am zweiten Ende (112) des Körpers ausgebildeten Blindbohrung (114) mit komplementären Abmessungen eingesetzt werden kann.

3. Zubehör nach Anspruch 1 oder 2, **dadurch gekennzeichnet, dass** der Kopf (12) und das zweite Ende (112) des Körpers (11) reversible Verbindungsmittel (115, 123) aufweisen, so dass der Kopf vom zweiten Ende des Körpers abgenommen werden kann.

4. Zubehör nach Anspruch 3, **dadurch gekennzeichnet, dass** die reversiblen Verbindungsmittel mindestens eine verformbare Passfeder (123) und mindestens eine Aussparung (115) zum Einsetzen der Passfeder umfassen, wobei die verformbare Passfeder und die Aussparung jeweils auf dem Kopf (12) und dem zweiten Ende (112) des Körpers oder umgekehrt angeordnet sind.

5. Zubehör nach einem der Ansprüche 3 oder 4, **dadurch gekennzeichnet, dass** der Kopf (12) eine zylindrische Zwischenschulter (124) zwischen der Ausrichtwelle (122) und dem Positionierelement (121) umfasst, wobei die Schulter einen Außendurchmesser aufweist, der größer ist als der Außendurchmesser der Welle, und dadurch, dass der Körper (11) eine Zwischensenkung (116) zwischen einem offenen Ende der Blindbohrung (114) und dem zweiten Ende des Körpers (112) umfasst, wobei die Senkung (116) dergestalt ist, dass sich die Schulter (124) zumindest teilweise in die Senkung schiebt, wenn der Kopf am zweiten Ende des Körpers montiert ist.

6. Zubehör nach Anspruch 5, **dadurch gekennzeichnet, dass** die reversiblen Verbindungsmittel (115, 123) in einer zylindrischen Außenfläche der Schulter (124) und einer zylindrischen Innenfläche der Senkung (116) angeordnet sind.

7. Zubehör nach Anspruch 6, **dadurch gekennzeichnet, dass** die reversiblen Verbindungsmittel mindestens eine senkrecht zu einer gemeinsamen Drehachse R-R' der Welle und der Schulter des Kopfs (12) verformbare Passfeder (123) mit Kugel umfasst und mindestens eine Aussparung (115) zum Einsetzen der Passfeder, die in einer zylindrischen Innenfläche der Senkung ausgebildet ist, oder umgekehrt.

8. Zubehör nach Anspruch 7, **dadurch gekennzeichnet, dass** die Passfeder (123) eine Kugel (125) umfasst, die hängend auf eine Feder (126) in einer Bohrung (127) senkrecht zur gemeinsamen Achse R-R' der Welle und der Schulter des Kopfes montiert ist, wobei der Außendurchmesser des Durchgangsendes der Bohrung (127) an der zylindrischen Außenfläche der Schulter verkleinert ist, so dass die Kugel (125) an der Oberfläche der Schulter teilweise vorsteht.

9. Zubehör nach einem der Ansprüche 7 oder 8, **dadurch gekennzeichnet, dass** es eine Vielzahl von verformbaren Passfedern (123) umfasst, die in einer regelmäßigen winkelförmigen Anordnung an der Oberfläche der Schulter verteilt sind, und eine entsprechende Vielzahl von Aussparungen (115) für jede in der zylindrischen Innenfläche der Senkung des Körpers ausgebildete Passfeder.

10. Zubehör nach einem der Ansprüche 7 bis 9, **dadurch gekennzeichnet, dass** mindestens eine Aussparung (115) durch eine Ringnut mit einer Achse F-F' in der zylindrischen Innenfläche der Senkung des Körpers gebildet wird.

11. Zubehör nach einem der Ansprüche 1 bis 10, **dadurch gekennzeichnet, dass** das Positionierelement eine Anschlagplatte (128) an dem zweiten Ende des Körpers und eine Aufnahme (129) zum Einsetzen des Positionierwerkzeugs umfasst.

12. Zubehör nach Anspruch 11, **dadurch gekennzeichnet, dass** die Aufnahme in einem Stift (130) ausgebildet ist, der mit der Anschlagplatte (128) fest verbunden ist und sich senkrecht dazu erstreckt.

13. Zubehör nach einem der Ansprüche 1 bis 12, **dadurch gekennzeichnet, dass** es Mittel zum Einstellen der Winkellage des Kopfes auf dem Körper um die Achse F-F' beinhaltet.

14. Zubehör nach Anspruch 14, **dadurch gekennzeichnet, dass** die Mittel zum Einstellen der Winkellage des Kopfes (12) auf dem Körper (11) mindestens eine Skala und einen Schieber umfasst, die gegenüberliegend jeweils auf dem Körper und dem Kopf oder umgekehrt gebildet werden.

15. Verfahren zum Zentrieren eines Werkzeugs oder einer Werkzeughalterspindel auf der Drehachse X-X' einer rotierenden Führungsbuchse (C) einer Bearbeitungsmaschine mit Hilfe eines Zubehörs (1) nach einem der Ansprüche 1 bis 14, **dadurch gekennzeichnet, dass** es darin besteht:
- a) eine Messsonde (S), insbesondere zum Messen von Entfernungen, im Positionierelement (121) des Kopfes (12) des Zentrierzubehörs zu befestigen,
- b) den Körper (11) des Zubehörs in eine Werkzeughalterspindel (B) einzusetzen,
- c) die Werkzeughalterspindel (B) zu verschieben, so dass die Messsonde (S) gegenüber einer Messlatte (E) positioniert wird, die von der rotierenden Führungsbuchse (C) getragen wird,
- d) den Kopf (12) des Zubehörs (1) so zu verschieben, dass die Messsonde (S) in n aufeinanderfolgenden, gleichmäßig beabstandeten Messpositionen platziert werden kann, wobei n eine ganze Zahl größer 1 ist, und eine Entfernungsmessung zwischen der Sonde und der Messlatte in jeder Position durchgeführt werden kann,
- e) die erforderlichen Verschiebungen in Bezug auf die Achse X-X' auf den 3 orthogonalen Achsen gemäß den bei den n Messungen erfassten Werten zu bestimmen, so dass die Achse F-F' des Zubehörkörpers auf die Achse X-X' ausgerichtet ist,
- f) die Position der Werkzeughalterspindel (B) in Bezug auf die Achse X-X' entsprechend den in Schritt e) festgelegten Verschiebungen einzustellen.

16. Zentrierverfahren nach Anspruch 15, **dadurch gekennzeichnet, dass** die Sonde (S) mit einer elektronischen Mess- (PC) und Steuerungsvorrichtung verbunden ist, die an das elektronische Steuerungssystem der Bearbeitungsmaschine angeschlossen werden kann, um die Positionseinstellung des Werkzeugs nach jeder Messung automatisch zu steuern.

17. Vorrichtung zur Unterstützung der Zentrierung eines Werkzeugs auf einer Bearbeitungsmaschine mit einer rotierenden Führungsbuchse, **dadurch gekennzeichnet, dass** sie Folgendes umfasst:
- ein Zubehör (1) nach einem der Ansprüche 1 bis 14,
- eine Messsonde (S), die auf dem Positionierelement des Werkzeugkopfes positioniert werden kann,
- eine elektronische Messvorrichtung (PC), die mit der Messsonde zusammenwirkt, um die von der Messsonde gemessenen Werte zu verarbeiten.

## Claims

1. An accessory (1) for centering a tool (O) or a tool-holder spindle in a rotating guide bush around a fixed axis X-X' of a machining appliance, **characterized in that** it comprises a rectilinear body (11) with longitudinal axis F-F' comprising, at a first end (111), an alignment member for aligning said axis F-F' with the axis X-X' of the rotating guide bush and, at a second end (112), a head (12) rotatably mounted around the axis F-F' and comprising a positioning member (121) able to receive a positioning tool (S), in particular a measuring probe.

2. The accessory according to claim 1, **characterized in that** the head (12) comprises an alignment shaft (122) on the axis F-F' of the body, said shaft (122) being secured with the positioning member (121) and being able to be inserted into a blind bore (114) of complementary dimensions formed along the axis F-F' at the second end (112) of the body.

3. The accessory according to claim 1 or 2, **characterized in that** the head (12) and the second end (112) of the body (11) comprise reversible connecting means (115, 123) such that the head is removable from said second end of the body.

4. The accessory according to claim 3, **characterized in that** the reversible connecting means comprise at least one deformable key (123) and at least one recess (115) for inserting said key, said deformable key and said recess being arranged respectively on the head (12) and the second end (112) of the body or vice versa.

5. The accessory according to claim 3 or 4, **characterized in that** the head (12) comprises an intermediate cylindrical shoulder (124) between the alignment shaft (122) and the support member (121), said shoulder having an outer diameter larger than the outer diameter of the shaft, and **in that** the body (11) comprises an intermediate spot facing (116) between an open end of the bore (114) and the second end of the body (112), said spot facing (116) being such that said shoulder (124) penetrates at least partially in said spot facing when the head is mounted at the second end of the body.

6. The accessory according to claim 5, **characterized in that** the reversible connecting means (115, 123) are arranged in an outer cylindrical surface of the shoulder (124) and an inner cylindrical surface (116) of the spot facing.

7. The accessory according to claim 6, **characterized in that** the reversible connecting means comprise at least one ball key (123) deformable perpendicular to a shared axis of revolution of the shaft and the shoulder of the head (12) and at least one recess (115) for inserting said key formed in an inner cylindrical surface of the spot facing, or vice versa.

8. The accessory according to claim 7, **characterized in that** the ball key (123) comprises a ball (125) mounted suspended on a spring (126) in a piercing (127) perpendicular to the shared axis R-R' of the shaft and the shoulder of the head, the outer diameter of the emerging end of said piercing (127) aligned with the outer cylindrical surface of the shoulder being reduced so as to allow a partial protrusion of the ball (125) at the surface of said shoulder.

9. The accessory according to one of claims 7 or 8, **characterized in that** it comprises a plurality of deformable keys (123) distributed in a regular angular arrangement on the surface of the shoulder and a corresponding plurality of recesses (115) for each of the keys formed in the inner cylindrical surface of the spot facing of the body.

10. The accessory according to one of claims 7 to 9, **characterized in that** the at least one recess (115) is formed by an annular groove with axis F-F' in the inner cylindrical surface of the spot facing of the body.

11. The accessory according to one of claims 1 to 10, **characterized in that** the positioning member comprises a stop plate (128) against the second end of the body and a shimming housing (129) for one said positioning tool.

12. The accessory according to claim 11, **characterized in that** the shimming housing is formed in a finger (130) secured to the stop plate (128) and extending perpendicular thereto.

13. The accessory according to one of claims 1 to 12, **characterized in that** it includes means for adjusting the angular position of the head on the body around the axis F-F'.

14. The accessory according to claim 14, **characterized in that** the means for adjusting the angular position of the head (12) on the body (11) comprise at least one graduated scale and a slider formed across from one another respectively on the body and the head, or vice versa.

15. A method for centering a tool or a tool-holder spindle on the rotation axis X-X' of a rotating guide bush (C) of a machining appliance using a centering accessory (1) according to one of claims 1 to 14, **characterized in that** it consists of
- a) fastening a measuring probe (S), in particular for distances, in the member (121) for positioning the head (12) of the centering accessory,
- b) inserting the body (11) of the accessory into the tool-holder spindle (B),
- c) moving the tool-holder spindle (B) to bring the measuring probe (S) across from a benchmark (E) on the rotating guide bush (C),
- d) moving the head (12) of the accessory (1) to place the measuring probe (S) in n successive measuring positions that are equidistant from one another, n being an integer greater than 1 and performing a distance measurement between the probe and the benchmark in each position,
- e) determining the necessary movements relative to the axis X-X' along 3 orthogonal axes based on values acquired during n measurements such that the axis F-F' of the body of the accessory is aligned with the axis X-X',
- f) adjusting the position of the tool-holder spindle (B) relative to the axis X-X' based on movements determined in step e).

16. The centering method according to claim 15, **characterized in that** the probe (S) is connected to an electronic measuring and control device, if applicable able to be connected to the electronic control system of the machining appliance in order to control the positioning adjustment of the tool automatically after each measurement.

17. A device for assisting with the centering of a machining appliance comprising a device with a rotating guide bush, **characterized in that** it includes:
- an accessory (1) according to one of claims 1 to 14,
- a measuring probe (S) able to be positioned on the member for positioning the head of the tool,
- an electronic measuring device (PC) cooperating with the measuring probe to process the values measured by the measuring probe.
